# EUROPEAN PATENT APPLICATION

(11) **EP 2 760 105 A1**
(43) Date of publication of application: **30.07.2014**
(21) Application number: 11872806.2
(22) Date of filing: 21.09.2011
(51) Int. Cl.: H02J 7/02

(54) **VEHICLE BATTERY CONTROL DEVICE AND VEHICLE BATTERY CONTROL METHOD**

(71) Applicant: Toyota Jidosha Kabushiki Kaisha, Toyota-shi, Aichi 471-8571 (JP)
(72) Inventor: MURATA, Takashi, Toyota-shi Aichi 471-8571 (JP)
(74) Representative: Intès, Didier Gérard André
(86) International application number: PCT/JP2011/005317
(87) International publication number: WO 2013/042165

(57) **Abstract**

To suppress overdischarge during charge of batteries including batteries connected in parallel due to a circulating current flowing between the batteries.

[SOLVING MEANS] A control apparatus for a vehicle battery having a first battery and a second battery connected in parallel is provided. Each of the first and second batteries is provided with a relay operating between an allowing state in which charge from the power supply section is allowed and in a non-allowing state in which the charge is not allowed. The control apparatus includes a controller performing charge processing in which, when a voltage difference exists between the first battery and the second battery, the relay provided for one of the batteries having a lower voltage is set at the allowing state to charge only the one of the batteries, and when the charge causes the voltage of the one of the batteries to be equal to the voltage of the other of the batteries, both the relays provided for the one and the other of the batteries are set at the allowing state to charge the one and the other of the batteries.

## Description

### TECHNICAL FIELD

The present invention relates to a control apparatus for a vehicle battery which stores an electric power to be supplied to a motor used for running a vehicle.

### BACKGROUND ART

An assembled battery including batteries connected in parallel is known as a battery which stores an electric power to be supplied to a motor used for running an electric vehicle, a hybrid vehicle or the like (see, for example, Patent Document 1). The assembled battery of this type is connected to a voltage converter through a system main relay. The system main relay is ON while the battery is discharged and is OFF while a vehicle is stopped (while the assembled battery is not used).

### PRIOR ART DOCUMENTS

### PATENT DOCUMENTS

[Patent Document 1] Japanese Patent Laid-Open No. 2004-111242
[Patent Document 2] Japanese Patent Laid-Open No. 2002-051479
[Patent Document 3] Japanese Patent Laid-Open No. 3 (1991)-190062

### DISCLOSURE OF THE INVENTION

### PROBLEMS TO BE SOLVED BY THE INVENTION

When a voltage difference exists between one of the batteries and another one of the batteries connected in parallel while the assembled battery is not used, however, a circulating current may flow from the battery having a higher voltage toward the battery having a lower voltage to overdischarge the battery having the higher voltage. It is thus an object of the present invention to suppress overdischarge during charge of batteries including batteries connected in parallel due to a circulating current flowing between the batteries.

### MEANS FOR SOLVING THE PROBLEMS

To solve the problem, the present invention provides (1) a control apparatus for a vehicle battery having a first battery and a second battery connected in parallel and charged with an electric power supplied from a power supply section, the vehicle battery storing an electric power to be supplied to a motor used for running a vehicle, each of the first and second batteries being provided with a relay operating between an allowing state in which charge from the power supply section is allowed and a non-allowing state in which the charge is not allowed, the control apparatus including a controller performing charge processing in which, when a voltage difference exists between the first battery and the second battery, the relay provided for one of the batteries having a lower voltage is set at the allowing state to charge only the one of the batteries, and when the charge causes the voltage of the one of the batteries to be equal to the voltage of the other of the batteries, both the relays provided for the one and the other of the batteries are set at the allowing state to charge the one and the other of the batteries.
(2) In the configuration of (1), the control apparatus further includes a first voltage information obtaining section obtaining information about a voltage of the first battery; and a second voltage information obtaining section obtaining information about a voltage of the second battery, wherein the controller can perform the charge processing based on obtaining results of the first and second voltage information obtaining sections.
(3) In the configuration of (2) or (3), the control apparatus further includes a heating section selectively heating one of the first and second batteries, wherein, in the vehicle battery for which the charge processing is performed, the one of the batteries is heated by the heating section, first discharge processing is performed in which both the one and the other of the batteries are discharged while the relays provided for the one and the other of the batteries are set at the allowing state, and thus the voltage of the one of the batteries is lower than the voltage of the other of the batteries. Since the one of the batteries is heated by the heating section, the internal resistance thereof becomes lower than that of the other of the batteries. When both the one and the other of the batteries are discharged, the electric storage amount (voltage) in the one of the batteries reaches a lower limit value first. As a result, the voltage of the other of the batteries is higher than that of the one of the batteries to produce a voltage difference between the one and the other of the batteries connected in parallel. The charge can be performed while suppressing a circulating current in the vehicle battery in which the voltage difference is produced between the batteries connected in parallel.
(4) In the configuration of (3), each of the one and the other of the batteries is a battery block including a plurality of battery elements connected in series, when any of the battery elements included in the one of the batteries reaches a lower limit voltage, the first discharge processing is switched to second discharge processing in which only the other of the batteries is discharged by switching the relay provided for the one of the batteries from the allowing state to the non-allowing state, and when any of the battery elements included in the other of the batteries reaches the lower limit voltage, the second discharge processing is stopped by switching the relay provided for the other of the batteries from the allowing state to the non-allowing state, and the charge processing is performed for the one and the other of the batteries after the stop of the second discharge processing. When any of the battery elements in the other of the batteries is deteriorated, the overdischarge of the deteriorated battery element can be suppressed.
(5) In the configuration of (4), the battery element may be a battery unit including a plurality of cells connected in parallel.
(6) To solve the problem, the present invention provides a control method for a vehicle battery having: a first battery and a second battery connected in parallel and charged with an electric power supplied from a power supply section; and a relay provided for each of the first and second batteries and operating between an allowing state in which charge from the power supply section is allowed and in a non-allowing state in which the charge is not allowed, the vehicle battery storing an electric power to be supplied to a motor used for running a vehicle, the method including performing charge processing in which, when a voltage difference exists between the first battery and the second battery, the relay provided for one of the batteries having a lower voltage is set at the allowing state to charge only the one of the batteries, and when the charge causes the voltage of the one of the batteries to be equal to the voltage of the other of the batteries, both the relays provided for the one and the other of the batteries are set at the allowing state to charge the one and the other of the batteries.
(7) In the configuration of (6), the vehicle battery includes a heating section selectively heating one of the first and second batteries, and in the vehicle battery for which the charge processing is performed, the one of the batteries is heated by the heating section, first discharge processing is performed in which both the one and the other of the batteries are discharged while the relays provided for the one and the other of the batteries are set at the allowing state, and thus the voltage of the one of the batteries is lower than the voltage of the other of the batteries. Since the one of the batteries is heated by the heating section, the internal resistance thereof becomes lower than that of the other of the batteries. When both the one and the other of the batteries are discharged, the electric storage amount (voltage) in the one of the batteries reaches a lower limit value first. As a result, the voltage of the other of the batteries is higher than that of the one of the batteries to produce a voltage difference between the one and the other of the batteries connected in parallel. The charge can be performed while suppressing a circulating current in the vehicle battery in which the voltage difference is produced between the batteries connected in parallel.
(8) In the configuration of (7), each of the one and the other of the batteries is a battery block including a plurality of battery elements connected in series, when any of the battery elements included in the one of the batteries reaches a lower limit voltage, the first discharge processing is switched to second discharge processing in which only the other of the batteries is discharged by switching the relay provided for the one of the batteries from the allowing state to the non-allowing state, and when any of the battery elements included in the other of the batteries reaches the lower limit voltage, the second discharge processing is stopped by switching the relay provided for the other of the batteries from the allowing state to the non-allowing state, and the charge processing is performed for the one and the other of the batteries after the stop of the second discharge processing. When any of the battery elements in the other of the batteries is deteriorated, the overdischarge of the deteriorated battery element can be suppressed.

### ADVANTAGE OF THE INVENTION

According to the present invention, during the charge of the vehicle battery including the batteries connected in parallel, the overdischarge due to a circulating current flowing from the other to the one of the batteries can be suppressed.

### BRIEF DESCRIPTION OF THE DRAWINGS

[Fig. 1] A block diagram of a vehicle.
[Fig. 2] A perspective view of a battery.
[Fig. 3] An exploded perspective view of a battery unit.
[Fig. 4] A section view of the battery unit.
[Fig. 5] A block diagram of a control apparatus for the vehicle battery.
[Fig. 6] A flow chart showing a method of discharging the battery.
[Fig. 7] A flow chart showing a method of charging the battery.
[Fig. 8] A schematic diagram schematically showing the electric storage amounts in batteries changed by charge and discharge (when the temperature is raised).
[Fig. 9] A schematic diagram schematically showing the electric storage amounts in the batteries changed by charge and discharge (when discharge is performed).
[Fig. 10] A schematic diagram schematically showing the electric storage amounts in the batteries changed by charge and discharge (when charge and discharge are prohibited).
[Fig. 11] A schematic diagram schematically showing the electric storage amounts in the batteries changed by charge and discharge (when charge is performed).

### MODE FOR CARRYING OUT THE INVENTION

### EMBODIMENT 1

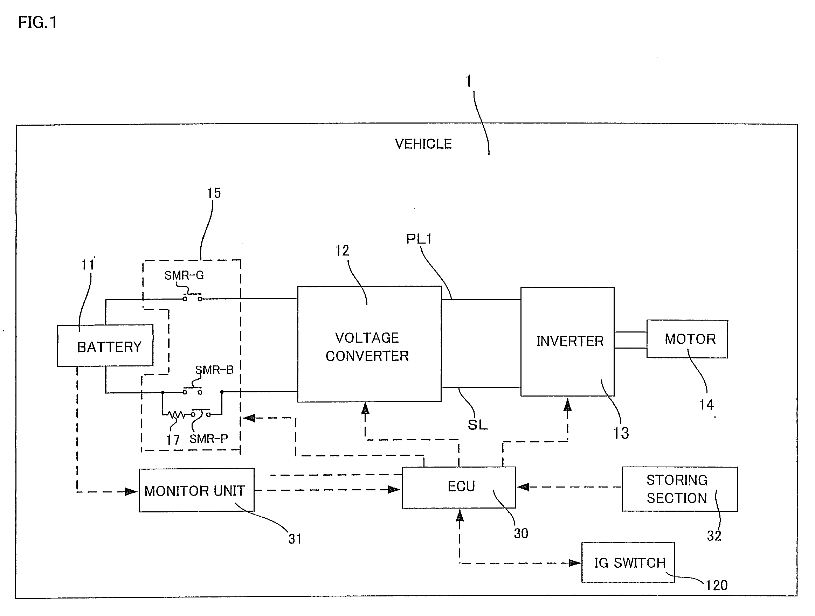

An embodiment of the present invention will hereinafter be described in detail with reference to the drawings. Fig. 1 is a block diagram of part of a vehicle on which a control apparatus for a battery according to the present embodiment is mounted. Although a vehicle 1 is an electric vehicle (EV) in which the output from the battery is used to drive a motor, the present invention is applicable, for example, to a plug-in hybrid vehicle (V-HEV) in which a commercial power source provided outside the vehicle is used to charge the battery.

Referring to Fig. 1, the vehicle 1 includes a battery 11, a voltage converter 12, an inverter 13, a motor 14, a system main relay 15, an ECU 30, a monitor unit 31, a storing section 32, and an IG switch 120. The vehicle 1 also includes a power source line PL1 and a ground line SL.

The battery 11 is connected to the voltage converter 12 through system main relays SMR-G, SMR-B, and SMR-P which constitute the system main relay 15. The system main relay SMR-G is connected to a positive terminal of the battery 11, and the system main relay SMR-B is connected to a negative terminal of the battery 11. The system main relay SMR-P and a precharge resistor 17 are connected in parallel to the system main relay SMR-B.

These system main relays SMR-G, SMR-B, and SMR-P are relays having contacts that are closed when their coils are energized. "ON" of the SMR means an energized state, and "OFF" of the SMR means a non-energized state.

The ECU 30 turns off all the system main relays SMR-G, SMR-B, and SMR-P while the power is shut off, that is, while the ignition switch 120 is at an OFF position. Specifically, the ECU 30 turns off the current for energizing the coils of the system main relays SMR-G, SMR-B, and SMR-P. The position of the ignition switch 120 is switched in the order from the OFF position to an ACC position. The ECU 30 may be a CPU or an MPU, and may include an ASIC circuit which performs, based on circuital operation, at least part of processing executed in the CPU or the like.

The precharge resistor 17 is connected to the system main relay SMR-P. Thus, even when the system main relay SMR-P is turned on, the input voltage to the inverter 13 can be slowly increased to prevent the occurrence of an inrush current.

When the ignition switch 120 is switched from an ON position to the OFF position, the ECU 30 first turns off the system main relay SMR-B and then turns off the system main relay SMR-G. This breaks the electrical connection between the battery 11 and the inverter 13 to enter a power shut-off state. The system main relays SMR-B, SMR-G, and SMR-P are controlled for energization or non-energization in response to a control signal provided by the ECU 30.

The voltage converter 12 increases the voltage supplied from the battery 11. The inverter 13 converts the DC voltage provided by the voltage converter 12 into a three-phase AC current and outputs the AC current to the motor 14. The monitor unit 31 is described later.

The ECU 30 performs control such that the State of Charge (SOC) of the battery 11 is maintained within a control range defined by a control upper limit value and a control lower limit value.

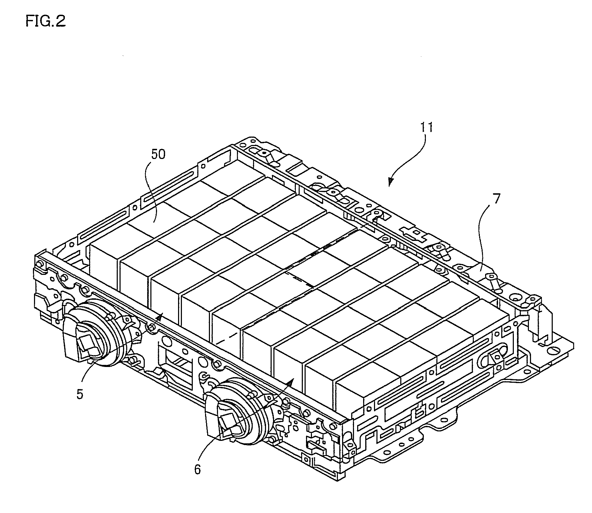

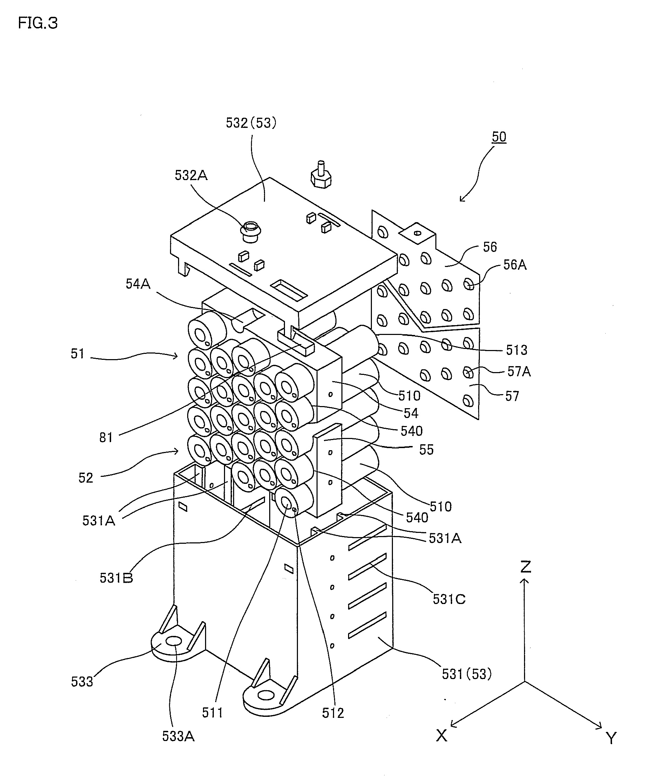

Next, the configuration of the battery is described with reference to Fig. 2 and Fig. 3. Fig. 2 is a perspective view of the battery and Fig. 3 is an exploded perspective view of a battery unit. Referring to Fig. 2, the battery 11 includes a first battery block (corresponding to a first battery) 5 and a second battery block (corresponding to a second battery) 6. A dotted line shown in Fig. 2 indicates the boundary between the first battery block 5 and the second battery block 6. The first battery block 5 and the second battery block 6 are connected electrically in parallel. The parallel connection of the first battery block 5 and the second battery block 6 can achieve the battery 11 having a high capacity.

The first battery block 5 includes a plurality of battery units (corresponding to battery elements) 50. These battery units 50 are connected electrically in series. The series connection of the battery units 50 can achieve the battery 11 having a high output. The second battery block 6 has the same configuration as that of the first battery block 5, so that detailed description thereof is omitted. Although each of the first battery block 5 and the second battery block 6 has 18 battery units 50, the number of the battery units 50 can be changed as appropriate depending on the specifications of the battery unit 50 or the vehicle 1. The battery units 50 included in the first battery block 5 and the second battery block 6 are arranged in matrix form within a battery case 7.

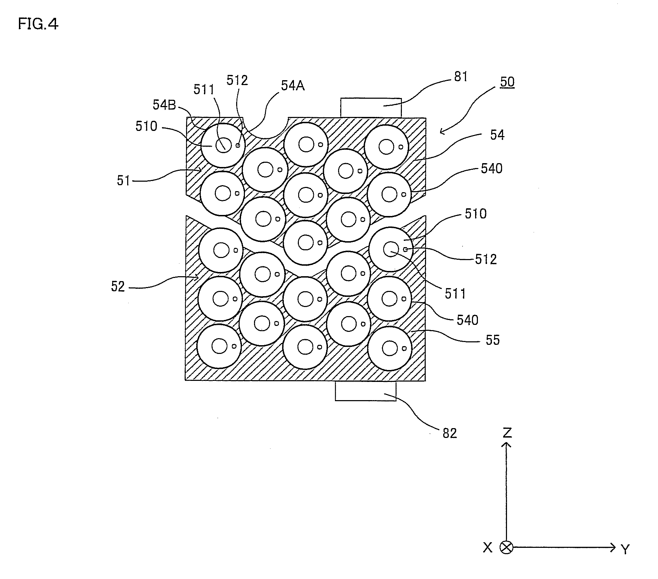

Next, the configuration of the battery unit 50 is described with reference to Fig. 3 and Fig. 4. Fig. 3 is the exploded perspective view of the battery unit. Fig. 4 is a section view of the battery unit from which the battery case is omitted. The battery unit 50 includes a first assembled battery 51, a second assembled battery 52, and an assembled battery case 53. The first assembled battery 51 includes a plurality of cells 510, an upper holding member 54, and an upper bus bar 56. The second assembled battery 52 includes a plurality of cells 510, a lower holding member 55, and a lower bus bar 57. The cell 510 may be a secondary battery such as a lithium-ion battery or a nickel metal hydride battery, or may be a capacitor. The cell 510 is formed in a cylindrical shape, and includes a positive electrode terminal 511 and a gas discharge valve 512 at one end in a longitudinal direction and includes a negative electrode terminal 513 (see Fig. 3) at the other end in the longitudinal direction. The cells 510 included in the first assembled battery 51 and the second assembled battery 52 are arranged in a diameter direction of the cells 510 such that the positive electrode terminals 511 are aligned.

The negative electrode terminal 513 included in the cell 510 of the first assembled battery 51 is welded to a weld portion 56A provided on the upper bus bar 56. The negative electrode terminal 513 included in the cell 510 of the second assembled battery 52 is welded to a weld portion 57A provided on the lower bus bar 57. Each of the weld portions 56A and 57A has a cantilevered structure and is elastically deformed when an external force is applied in an X axis direction. This can accommodate a dimensional error of the cell 510. Since the lower bus bar 57 has the same function as that of the upper bus bar 56, detailed description thereof is omitted.

The upper holding member 54 has a plurality of opening portions 540 for holding the cells 510 and holds the outer faces of the cells 510 in the diameter direction. The upper holding member 54 is a solid plate-shaped member and has the heat dissipation function of conducting the heat of some of the cells 510 having a higher temperature to the other cells 510 having a lower temperature. This reduces variations in temperature between the cells 510. Since the upper holding member 54 can be provided with both the holding function of holding the cells 510 and the heat dissipation function, the number of parts can be reduced to enable cost reduction. In other words, since an independent heat dissipation member for dissipating the heat of the cells 510 is not required, the cost can be reduced.

The upper holding member 54 may be made of metal. The upper holding member 54 made of metal can enhance the heat dissipation effect to effectively reduce the variations in temperature between the cells 510. The metal may be aluminum, copper, or iron. Since aluminum has a high thermal conductivity, the upper holding member 54 made of aluminum can effectively reduce the variations in temperature between the cells 510. Since aluminum is lightweight, the upper holding member 54 made of aluminum can reduce the weight of the battery unit 50. Since the lower holding member 55 has the same configuration as that of the upper holding member 54 except for the shape, description thereof is omitted.

The assembled battery case 53 includes a case body 531 and a lid body 532. The case body 531 is formed in a bottomed box shape and includes a leg portion 533 at its lower end. The leg portion 533 has a fastening hole portion 533A formed therein for fixing the battery unit 50. The leg portion 533 may be fixed to a bottom face of the battery case 7. The assembled battery case 53 has, on its inner face, a pair of incorporating guide portions 531A for incorporating the upper holding member 54 and the lower holding member 55. The incorporating guide portion 531A extends in an up-down direction. The upper holding member 54 and the lower holding member 55 can be slid along the pair of incorporating guide portions 531A to house the first assembled battery 51 and the second assembled battery 52 into the case body 531.

The case body 531 has coolant inflow ports 531B formed in one end face in a Y axis direction and extending in the longitudinal direction (X axis direction) of the cell 510, and has coolant outflow ports 531C formed in the other end face in the Y axis direction and extending in the longitudinal direction of the cell 1. A plurality of such coolant inflow ports 531B and a plurality of such coolant outflow ports 531C are formed at predetermined intervals in a height direction (Z axis direction) of the battery unit 50. The coolant inflow port 531B is connected to an intake duct, not shown, and a blower is operated to direct air serving as a coolant into the assembled battery case 53 through the intake duct and the coolant inflow port 531B. The air directed into the assembled battery case 53 cools the cells 510 and then is let out through the coolant outflow port 531C.

The upper holding member 54 has, on its upper end face (end face in the Z axis direction), a gas guide portion 54A communicating with an exhaust-gas duct connecting port 532A. Referring to Fig. 4, a seal material 54B is interposed between the upper holding member 54 and the cell 510. The seal material 54B may be made of resin or rubber. The upper holding member 54 and the lower holding member 55 contained in this manner in the assembled battery case 53 can divide the interior of the assembled battery case 53 into two areas. Of these areas, the area where the positive electrode terminals 511 of the cells 510 are placed is used as a gas exhaust path, and the area where the negative electrode terminals 513 are placed is used as a cooling path. The seal material 54B is formed thin not to interfere with heat exchange between the cell 510 and the upper holding member 54 (lower holding member 55).

When the cell 510 is overcharged or overdischarged, an electrolytic solution is electrolyzed to produce gas. When the internal pressure of the cell 510 reaches the operating pressure of the gas discharge valve 512, the gas is released through the gas discharge valve 512 to the gas exhaust path. The gas released to the gas exhaust path moves upward within the gas exhaust path, and is guided by the gas guide portion 54A and discharged through the exhaust-gas duct connecting port 532A.

An upper heater 81 is provided on an upper face of the upper holding member 54. When the upper heater 81 starts heating operation, the temperature of the upper holding member 54 rises. The upper holding member 54 is the solid plate-shaped member and conducts the heat from the upper heater 81 to the cells 510 held by the upper holding member 54. This can raise the temperature of the first assembled battery 51 at a reduced temperature to increase the battery output.

The upper heater 81 may be a cement-type resistor. The cement-type resistor includes a resistor housing case and a resistor housed in the resistor housing case. The resistor housing case is filled with a cement material. The resistor may be a folded metal plate. The metal may be an alloy containing copper and nickel. The resistor housing case may be made of ceramic. The ceramic may contain alumina to increase the thermal conductivity. The cement material may be an insulating sealing material in paste form containing alumina powder and silica powder. The upper heater 81 may be a Positive Temperature Coefficient (PTC) heater or a Peltier heater including a Peltier device.

A lower heater 82 is provided on a lower face of the lower holding member 55. When the lower heater 82 starts heating operation, the temperature of the lower holding member 55 rises. The lower holding member 55 is a solid plate-shaped member and conducts the heat from the lower heater 82 to the cells 510 held by the lower holding member 54. This can raise the temperature of the second assembled battery 52 at a reduced temperature to increase the battery output. Since an air layer is formed between the upper holding member 54 and the lower holding member 55, the heat exchange between the holding members 54 and 55 is suppressed.

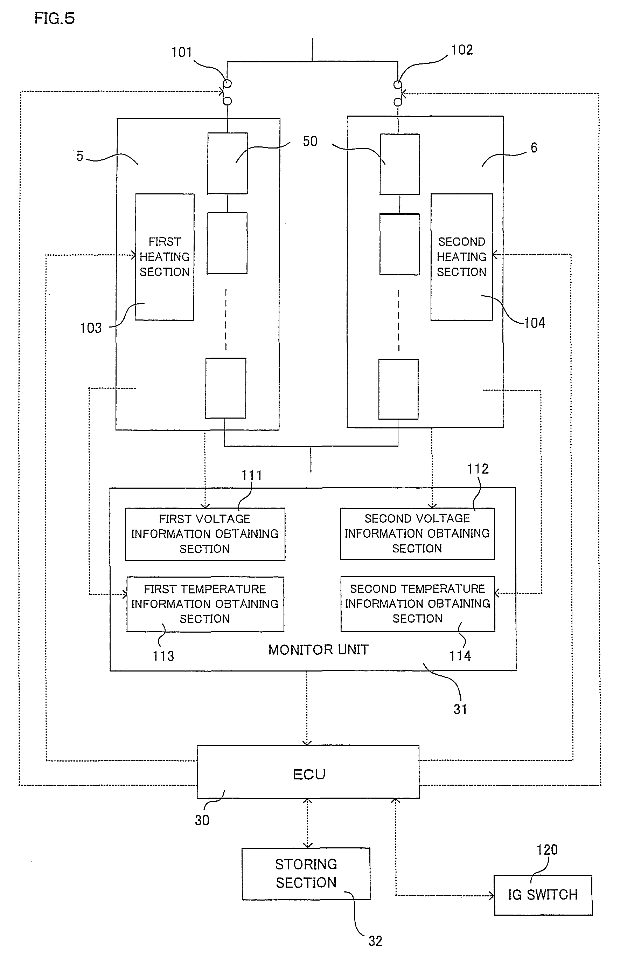

Next, detailed description is made of a control apparatus for the vehicle battery which controls the battery 11 with reference to Fig. 5. The components identical to those in Fig. 1 are designated with the same reference numerals. The first battery block 5 and the second battery block 6 are provided with a first relay 101 and a second relay 102, respectively. Each of the first relay 101 and the second relay 102 is a contact-type relay. Alternatively, each of the first relay 101 and the second relay 102 may be a semiconductor-type relay.

The ECU (corresponding to a controller) 30 controls the switching operation of the first relay 101 and the second relay 102. The ECU for controlling the first relay 101 and the second relay 102 may be a unit different from the ECU for controlling the other vehicle components (for example, the voltage converter 12).

A first heating section 103 includes all of the first heaters 81 and the second heaters 82 provided for the first battery block 5, and a second heating section 104 includes all of the first heaters 81 and the second heaters 82 provided for the second battery block 6.

The monitor unit 31 includes a first voltage information obtaining section 111, a second voltage information obtaining section 112, a first temperature information obtaining section 113, and a second temperature information obtaining section 114. The first voltage information obtaining section 111 obtains the information about the voltage of each of the battery units 50 included in the first battery block 5. The second voltage information obtaining section 112 obtains the information about the voltage of each of the battery units 50 included in the second battery block 6. The monitor unit 31 outputs the voltage information obtained by the first voltage information obtaining section 111 and the second voltage information obtaining section 112 to the ECU 30. The ECU 30 calculates the voltage value of each of the battery units 50 included in the first battery block 5 and the second battery unit 6 based on the voltage information output from the monitor unit 31.

The first temperature information obtaining section 113 obtains the information about the temperature of each of the battery units 50 included in the first battery block 5. The second temperature information obtaining section 114 obtains the information about the temperature of each of the battery units 50 included in the second battery block 6. The monitor unit 31 outputs the temperature information obtained by the first temperature information obtaining section 113 and the second temperature information obtaining section 114 to the ECU 30. The ECU 30 calculates the temperature of each of the battery units 50 included in the first battery block 5 and the second battery block 6 based on the temperature information output from the monitor unit 31. Each of the first temperature information obtaining section 113 and the second temperature information obtaining section 114 may be a thermistor. The ECU 30 detects the position of the ignition switch 120 driven between the OFF position and the ON position.

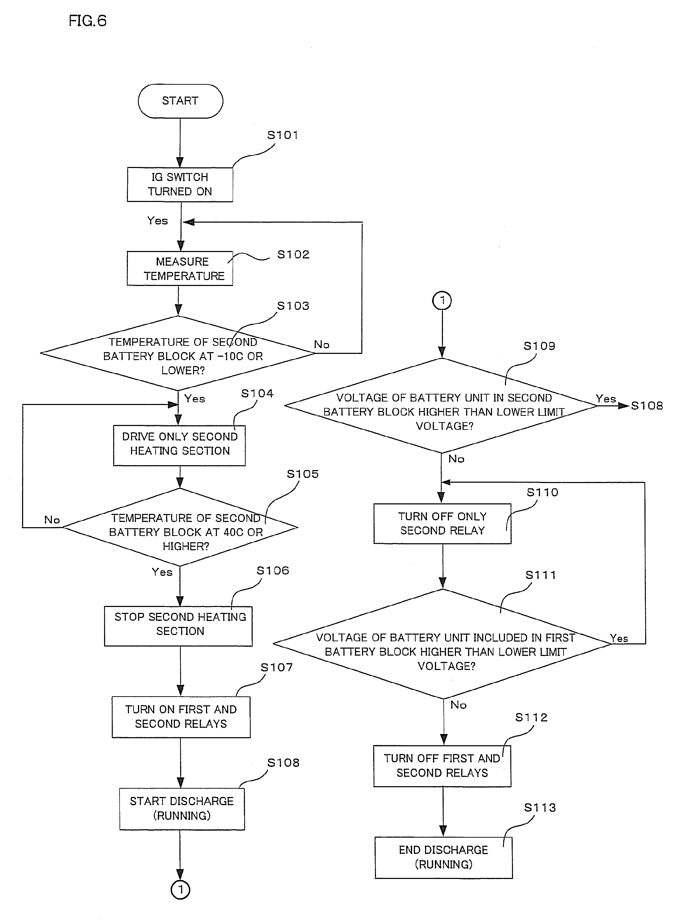

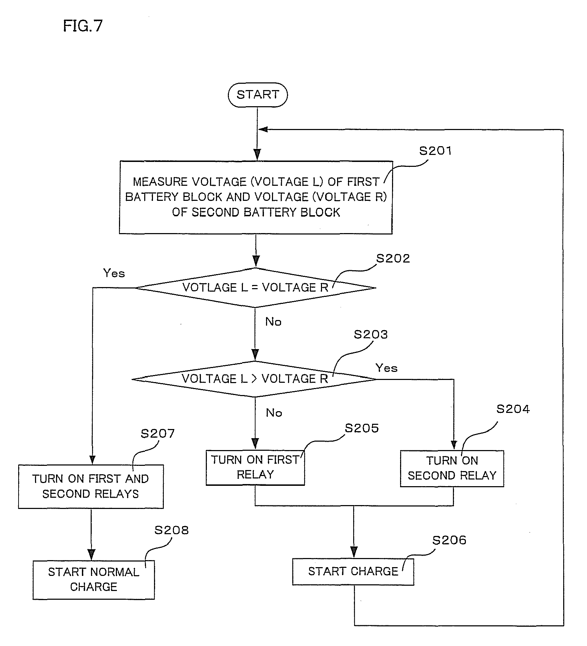

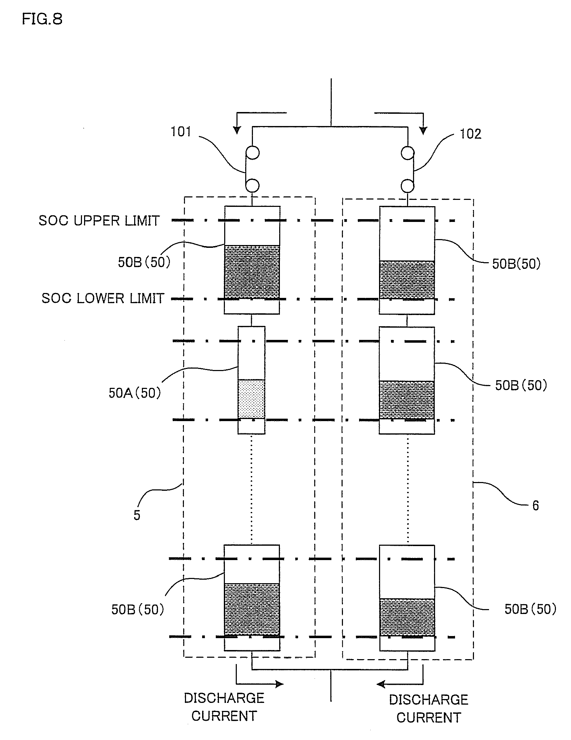

Next, the operation of the control apparatus for the vehicle battery is described with reference to Fig. 6 to Fig. 11. Fig. 6 is a flowchart showing a method of discharging the battery. Fig. 7 is a flow chart showing a method of charging the battery. The ECU 30 interprets a program read from the storing section 32 to perform the processing shown in the flow charts of Fig. 6 and Fig. 7. Fig. 8 to Fig. 11 are schematic diagrams schematically showing the electric storage amounts in the batteries changed by charge and discharge. It is assumed that the first heating section 103 and the second heating section 104 are stopped and that the first relay 101 and the second relay 102 are OFF at an initial state. When the first relay 101 is turned on, the charge of the first battery block 5 is allowed (allowing state). When the first relay 101 is turned off, the charge of the first battery block 5 is prohibited (non-allowing state). Similarly, when the second relay 102 is turned on, the charge of the second battery block 6 is allowed (allowing state), and when the second relay 102 is turned off, the charge of the second battery block 6 is prohibited (non-allowing state).

When the ignition switch 120 is turned on at step S101, the ECU 30 proceeds to step S102. At step S102, the ECU 30 starts the temperature measurement based on the detection results of the first temperature information obtaining section 113 and the second temperature information obtaining section 114, and then proceeds to step S103.

At step S103, the ECU 30 determines whether or not the temperature of the second battery block 6 is equal to or lower than -10°C based on the detection result of the second voltage information obtaining section 112. When the temperature of the second battery block 6 is equal to or lower than -10°C, the ECU 30 proceeds to step S104. When the temperature of the second battery block 6 is higher than -10°C, the ECU 30 returns to step S102.

At step S104, the ECU 30 drives the second heating section 104. In this case, the ECU 30 may drive one of the first heater 81 and the second heater 82 included in the second heating section 104 or may drive both the first heater 81 and the second heater 82. When one of the first heater 81 and the second heater 82 is driven, the cells 510 provided with the other heater are not heated and thus the battery deterioration resulting from a temperature rise can be suppressed. Although the second heating section 104 is driven on the basis of the temperature of the second battery block 6, the second heating section 104 may be driven on the basis of another criterion. The other criterion may be the temperature of engine oil. The temperature of -10°C serving as the threshold value is an arbitrary value set on the basis of the battery characteristic in which the internal resistance rises as the temperature drops, and the threshold value can be changed as appropriate depending on the specifications of the battery.

Of the first battery block 5 and the second battery block 6, only the second battery block 6 is heated and the first battery block 5 is not heated, thereby making it possible to avoid the deterioration of the first battery block 5 due to a temperature rise.

At step S105, the ECU 30 determines whether or not the temperature of the second battery block 6 is raised to 40°C or higher. When the temperature of the second battery block 6 is raised to 40°C or higher, the ECU 30 proceeds to step S106. When the temperature of the second battery block 6 is not raised to 40°C or higher, the ECU 30 returns to step S104. The temperature of 40°C serving as the threshold value can be changed as appropriate depending on the specifications of the battery.

At step S106, the ECU 30 stops the driving of the second heating section 104 and proceeds to step S107. At step S106, the ECU 30 may store the historical information representing the driving of the second heating section 104 in the storing section 32. Next time the ECU 30 performs the processing of the flow chart in Fig. 6, the ECU 30 may read the historical information from the storing section 32 to drive the different heating section (that is, the first heating section 103) from the heating section 104. In other words, the ECU may selectively drive the first heating section 103 and the second heating section 104. Since the first battery block 5 and the second battery block 6 are alternately heated, the life of the battery 11 can be prolonged as compared with the case where only one of the battery blocks is concentratedly heated.

At step S107, the ECU 30 switches the first relay 101 and the second relay 102 from OFF to ON and proceeds to step S108. At step S108, the ECU 30 allows the discharge of the first battery block 5 and the second battery block 6 (that is, performs first discharge processing), and proceeds to step S109.

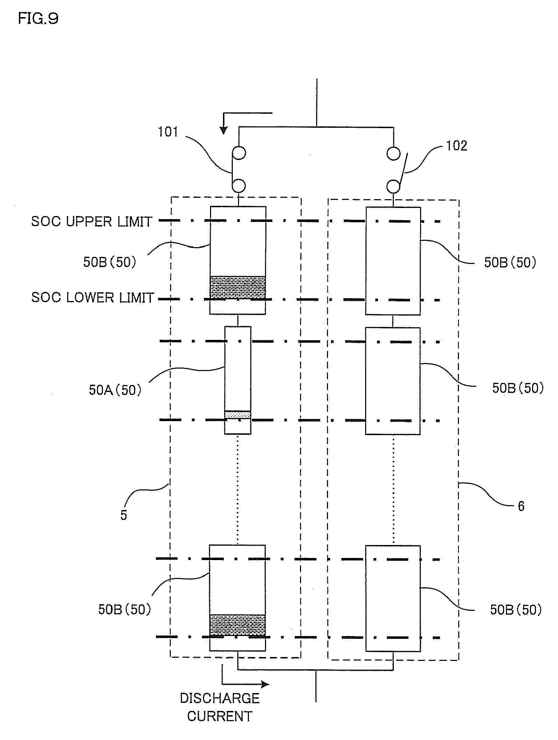

Fig. 8 schematically shows the electric storage amounts in the battery units 50 after the discharge of the battery 11 is allowed. In the first battery block 5 and the second battery block 6, the battery unit 50 having a deteriorated capacity is particularly referred to as a deteriorated battery unit 50A, and the battery unit 50 having a relatively less deteriorated capacity is particularly referred to as an undeteriorated battery unit 50B. The electric storage amounts in the battery units 50 are shaded, and the directions of current flow are indicated by arrows. These definitions also apply to the drawings of Fig. 9 to Fig. 11. In the present embodiment, it is assumed that the first battery block 5 includes the deteriorated battery unit 50A and that the second battery unit 6 does not include the deteriorated battery unit 50A. The battery is deteriorated in capacity due to repeated charge and discharge or a temperature rise, and the rate of the capacity deterioration may vary among the battery units 50.

Referring to Fig. 8, the second battery block 6 has an internal resistance lower than that of the first battery block 5 since the temperature of the second battery block 6 is raised at step S104, so that the second battery block 6 provides an output during discharge higher than that of the first battery block 5. For this reason, as the battery 11 is discharged, the electric storage amounts in the undeteriorated battery units 50B included in the second battery block 6 become smaller than the electric storage amounts in the undeteriorated battery units 50B included in the first battery block 5.

Returning to the description of the flow chart, at step S109, the ECU determines whether or not the voltage of the battery unit 50 included in the second battery block 6 is higher than a lower limit voltage. When the voltage of the battery unit 50 is lower than the lower limit voltage, the ECU 30 proceeds to step S110. When the voltage of the battery unit 50 is higher than the lower limit voltage, the ECU 30 returns to step S108.

The lower limit voltage depends on the type of the vehicle. When the vehicle 1 is the plug-in hybrid vehicle (PHV), the lower limit voltage can be set so as to provide a sufficient output during hybrid running in which both the engine and the battery 11 are used for the running. When the vehicle 1 is the electric vehicle (EV), the lower limit voltage can be set from the viewpoint of suppressing the progression of the battery deterioration. The lower limit voltage in the plug-in hybrid vehicle is higher than the lower limit voltage in the electric vehicle. The lower limit voltage may also be changed as appropriate depending on the type of the battery.

At step S110, the ECU 30 turns off only the second relay 102 out of the first relay 101 and the second relay 102. Fig. 9 schematically shows the electric storage amounts in the battery units 50 immediately after the second relay 102 is turned off. Referring to Fig. 9, the turn-off of the second relay 102 causes the vehicle 1 to switch to a running mode in which the vehicle 1 runs only with the power output from the first battery block 5 out of the first battery block 5 and the second battery block 6, that is, a mode in which second discharge processing is performed. The second discharge processing is performed to gradually reduce the electric storage amounts in the battery units 50 in the first battery block 5.

Returning to the description of the flow chart, at step S111, the ECU 30 determines whether or not the voltage of the battery unit 50 (that is, the voltage value of the deteriorated battery unit 50A) included in the first battery block 5 is higher than the lower limit voltage. When the voltage of the battery unit 50 is lower than the lower limit voltage, the ECU 30 proceeds to step S112. When the voltage of the battery unit 50 is higher than the lower limit voltage, the ECU 30 returns to step S110. Since the lower limit voltage and the lower limit threshold are defined above, the description thereof is not repeated.

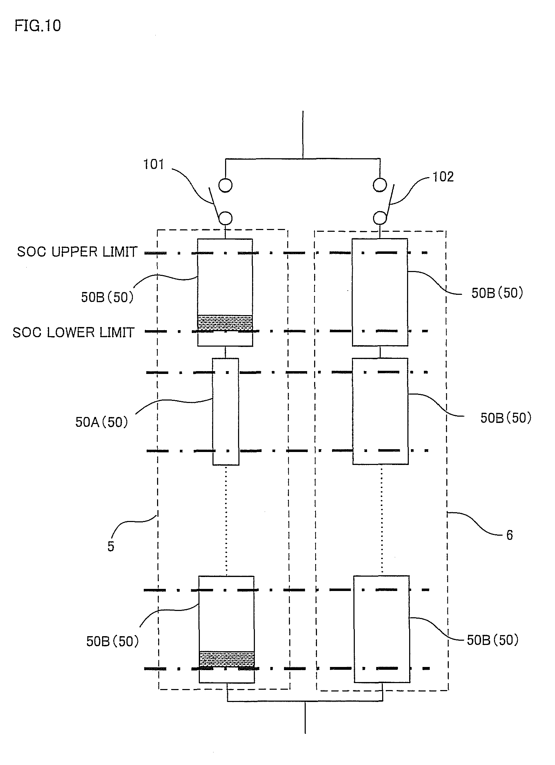

At step S112, the ECU 30 turns off the second relay 102, that is, sets both the first relay 101 and the second relay 102 at the OFF state. Fig. 10 schematically shows the electric storage amounts in the battery units 50 immediately after both the first relay 101 and the second relay 102 are turned off. Of the battery units 50 included in the first battery block 5, the deteriorated battery unit 50A has an extremely small electric storage amount. At step S113, the discharge is ended.

Since both the first battery block 5 and the second battery block 6 include the battery unit 50 having the voltage lower than the lower limit voltage in the state at step S113, they need charging. A possible method of charging the first battery block 5 and the second battery block 6 is to charge the first battery block 5 and the second battery block 6 simultaneously while both the first relay 101 and the second relay 102 are ON. In the method, however, a voltage difference between the first battery block 5 and the second battery block 6 may cause a circulating current to flow from one of the battery blocks having a higher voltage toward the other battery block having a lower voltage at the instant of the turn-on of the first relay 101 and the second relay 102 to result in the overdischarge of the battery units included in the one of the battery blocks.

Specifically, in the state shown by Fig. 10, a voltage L of the first battery block 5 is higher than a voltage R of the second battery block 6, so that a circulating current flows from the first battery block 5 toward the second battery block 6 at the instant of the turn-on of the first relay 101 and the second relay 102. The circulating current may lead to the overdischarge of the deteriorated battery unit 50A included in the first battery block 5. To address this, in the present embodiment, the battery 11 is charged in the following charge method to suppress the overdischarge of the deteriorated battery unit 50A.

Referring to Fig. 7, at step S201, the ECU 30 calculates the voltage L of the first battery block 5 and the voltage R of the second battery block 6, and proceeds to step S202. At step S202, the ECU 30 determines whether or not the voltage L of the first battery block 5 is equal to the voltage R of the second battery block 6. When the voltage L of the first battery block 5 is equal to the voltage R of the second battery block 6, the ECU 30 proceeds to step S207. When the voltage L of the first battery block 5 is not equal to the voltage R of the second battery block 6, the ECU 30 proceeds to step S203.

At step S203, the ECU 30 determines whether or not the voltage L of the first battery block 5 is lower than the voltage R of the second battery block 6. When the voltage L of the first battery block 5 is higher than the voltage R of the second battery block 6 (corresponding to the state shown in Fig. 9), the ECU 30 proceeds to step S204. When the voltage L of the first battery block 5 is lower than the voltage R of the second battery block 6, the ECU 30 proceeds to step S205.

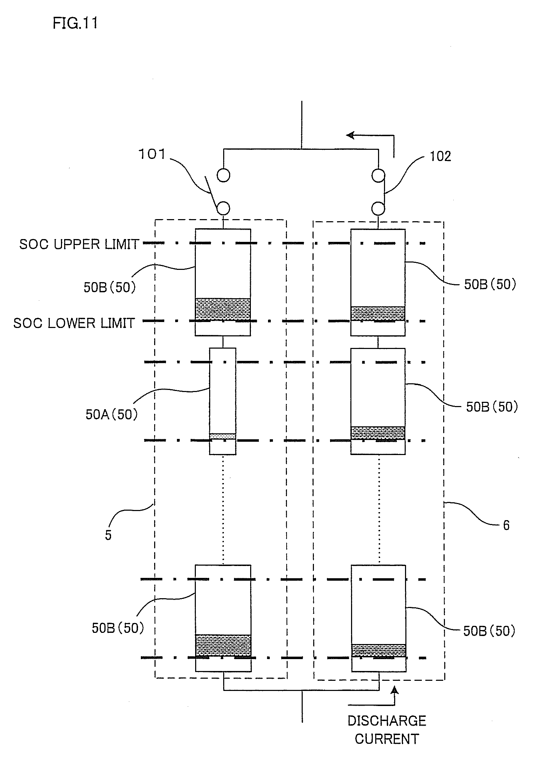

At step S204, the ECU 30 turns on the second relay 102 and proceeds to step S206. At step S206, the ECU 30 starts the charge of the battery 11 and returns to step S201. The battery 11 may be charged by connecting a commercial power source (corresponding to a power supply section) to a charger, not shown, mounted on the vehicle 1. Alternatively, the battery 11 may be charged by operating the motor 14 as a generator (corresponding to the power supply section) and supplying the generated power through the inverter 13 and the voltage converter 12. In this case, referring to Fig. 11, only the second battery block 6, out of the first battery block 5 and the second battery block 6, is charged to gradually reduce the voltage difference between the first battery block 5 and the second battery block 6.

As described above, according to the configuration of the present embodiment, the battery 11 having the first battery block 5 including the deteriorated battery unit 50A and the second battery block 6 having the voltage lower than that of the first battery block 5 and including no deteriorated battery block 50A is charged such that only the second battery block 6 is charged until the voltage difference between these battery blocks 5 and 6 is eliminated. This can suppress the overdischarge of the deteriorated battery unit 50A included in the first battery block 5. The flow of the circulating current from the first battery block 5 toward the second battery block 6 can be prevented to suppress the overcharge of the deteriorated battery unit 50A included in the first battery block 5.

If the deteriorated battery unit 50A is overdischarged, the battery 11 needs replacing and the cost is increased. According to the configuration of the present embodiment, the overdischarge of the deteriorated battery unit 50A is suppressed to elongate the cycle of replacement of the battery 11.

At step S205, the ECU 30 turns on the first relay 101 and proceeds to step S206. At step S206, the ECU 30 starts the charge of the battery 11 and returns to step S201. In this case, only the first battery block 5, out of the first battery block 5 and the second battery block 6, is charged to gradually reduce the voltage difference between the first battery block 5 and the second battery block 6. When the battery unit 50 having the most deteriorated capacity is included in the second battery block 6, the voltage R of the second battery block 6 is higher than the voltage L of the first battery block 5.

The ECU 30 turns on the first relay 101 and the second relay 102 at step S207, and starts normal charge at step S108. The normal charge refers to charge different from the charge at step S206, that is, the charge performed to eliminate the voltage difference between the first battery block 5 and the second battery block 6, and means the charge of the battery 11 until the SOC reaches close to the control upper limit value when the vehicle 1 is the electric vehicle (EV).

### MODIFICATION 1

In the embodiment described above, as shown in Fig. 9, the second discharge processing of discharging only the first battery block 5 is performed after the discharge of the second battery block 6 is prohibited. However, the present invention is not limited thereto. After the discharge of the second battery block 6 is prohibited, the second discharge processing may be omitted and the charge processing shown in Fig. 10 may be performed.

### MODIFICATION 2

In the embodiment described above, each of the first battery block 5 and the second battery block 6 is formed of the battery units 50 each including the plurality of cells 510 connected in parallel. However, the present invention is not limited thereto, and the battery block may be formed of the cells 510. In this case, each of the first battery block 5 and the second battery block 6 is formed of the cells 510 connected in series. The cell 510 may be a battery cell including one power-generating element or may be a battery module provided by connecting a plurality of such battery cells.

### DESCRIPTION OF THE REFERENCE NUMERALS

1 VEHICLE 5 FIRST BATTERY BLOCK 6 SECOND BATTERY BLOCK 7 BATTERY CASE 11 BATTERY 12 VOLTAGE CONVERTER 13 INVERTER 14 MOTOR 15 SYSTEM MAIN RELAY 17 PRECHARGE RESISTOR 30 ECU 32 STORING SECTION 50 BATTERY UNIT 50A DETERIORATED BATTERY UNIT 50B UNDETERIORATED BATTERY UNIT 51 FIRST ASSEMBLED BATTERY 52 SECOND ASSEMBLED BATTERY 53 ASSEMBLED BATTERY CASE 54 UPPER HOLDING MEMBER 55 LOWER HOLDING MEMBER 56 UPPER BUS BAR 57 LOWER BUS BAR 101 FIRST RELAY 102 SECOND RELAY 103 FIRST HEATING SECTION 104 SECOND HEATING SECTION 111 FIRST VOLTAGE INFORMATION OBTAINING SECTION 112 SECOND VOLTAGE INFORMATION OBTAINING SECTION 113 FIRST TEMPERATURE INFORMATION OBTAINING SECTION 14 SECOND TEMPERATURE INFORMATION OBTAINING SECTION

## Claims

1. A control apparatus for a vehicle battery having a first battery and a second battery connected in parallel and charged with an electric power supplied from a power supply section, the vehicle battery storing an electric power to be supplied to a motor used for running a vehicle,
each of the first and second batteries being provided with a relay operating between an allowing state in which charge from the power supply section is allowed and a non-allowing state in which the charge is not allowed,
the control apparatus comprising a controller performing charge processing in which, when a voltage difference exists between the first battery and the second battery, the relay provided for one of the batteries having a lower voltage is set at the allowing state to charge only the one of the batteries, and when the charge causes the voltage of the one of the batteries to be equal to a voltage of the other of the batteries, both the relays provided for the one and the other of the batteries are set at the allowing state to charge the one and the other of the batteries.

2. The control apparatus for the vehicle battery according to claim 1, further comprising:
a first voltage information obtaining section obtaining information about a voltage of the first battery; and
a second voltage information obtaining section obtaining information about a voltage of the second battery
wherein the controller performs the charge processing based on obtaining results of the first and second voltage information obtaining sections.

3. The control apparatus for the vehicle battery according to claim 1 or 2, further comprising a heating section selectively heating one of the first and second batteries,
wherein, in the vehicle battery for which the charge processing is performed, the one of the batteries is heated by the heating section, first discharge processing is performed in which both the one and the other of the batteries are discharged while the relays provided for the one and the other of the batteries are set at the allowing state, and thus the voltage of the one of the batteries is lower than the voltage of the other of the batteries.

4. The control apparatus for the vehicle battery according to claim 3, wherein each of the one and the other of the batteries is a battery block including a plurality of battery elements connected in series,
when any of the battery elements included in the one of the batteries reaches a lower limit voltage, the first discharge processing is switched to second discharge processing in which only the other of the batteries is discharged by switching the relay provided for the one of the batteries from the allowing state to the non-allowing state, and
when any of the battery elements included in the other of the batteries reaches the lower limit voltage, the second discharge processing is stopped by switching the relay provided for the other of the batteries from the allowing state to the non-allowing state, and the charge processing is performed for the one and the other of the batteries after the stop of the second discharge processing.

5. The control apparatus for the vehicle battery according to claim 4, wherein the battery element is a battery unit including a plurality of cells connected in parallel.

6. A control method for a vehicle battery having: a first battery and a second battery connected in parallel and charged with an electric power supplied from a power supply section; and a relay provided for each of the first and second batteries and operating between an allowing state in which charge from the power supply section is allowed and a non-allowing state in which the charge is not allowed, the vehicle battery storing an electric power to be supplied to a motor used for running a vehicle, the method comprising:
performing charge processing in which, when a voltage difference exists between the first battery and the second battery, the relay provided for one of the batteries having a lower voltage is set at the allowing state to charge only the one of the batteries, and when the charge causes the voltage of the one of the batteries to be equal to a voltage of the other of the batteries, both the relays provided for the one and the other of the batteries are set at the allowing state to charge the one and the other of the batteries.

7. The control method for the vehicle battery according to claim 6, wherein the vehicle battery includes a heating section selectively heating one of the first and second batteries, and
in the vehicle battery for which the charge processing is performed, the one of the batteries is heated by the heating section, first discharge processing is performed in which both the one and the other of the batteries are discharged while the relays provided for the one and the other of the batteries are set at the allowing state, and thus the voltage of the one of the batteries is lower than the voltage of the other of the batteries.

8. The control method for the vehicle battery according to claim 7, wherein each of the one and the other of the batteries is a battery block including a plurality of battery elements connected in series,
when any of the battery elements included in the one of the batteries reaches a lower limit voltage, the first discharge processing is switched to second discharge processing in which only the other of the batteries is discharged by switching the relay provided for the one of the batteries from the allowing state to the non-allowing state, and
when any of the battery elements included in the other of the batteries reaches the lower limit voltage, the second discharge processing is stopped by switching the relay provided for the other of the batteries from the allowing state to the non-allowing state, and the charge processing is performed for the one and the other of the batteries after the stop of the second discharge processing.
